# EUROPÄISCHE PATENTSCHRIFT

(11) **EP 0 833 142 B1**
(45) Veröffentlichungstag und Bekanntmachung des Hinweises auf die Patenterteilung: **31.07.2002**
(21) Anmeldenummer: 97115687.2
(22) Anmeldetag: 10.09.1997
(51) Int. Cl.: G01N 1/06

(54) **Kryostatmikrotom**
Cryo-microtome
Cryostat-microtome

(30) Priorität: 30.09.1996 DE 19640044
(43) Veröffentlichungstag der Anmeldung: 01.04.1998
(73) Patentinhaber: Microm International GmbH, 69190 Walldorf (DE)
(72) Erfinder: Teppke, Dieter, 68723 Schwetzingen (DE)
(74) Vertreter: Gnatzig, Klaus

(56) Entgegenhaltungen:
- WO-A-87/02130
- WO-A-88/02851
- US-A- 3 495 490
- US-A- 3 732 768
- US-A- 4 548 051

## Beschreibung

Die Anmeldung betrifft ein Kryostatmikrotom bzw. einen Mikrotom-Kryostaten mit einer Kryostatkammer und einem in der Kryostatkammer angeordneten Mikrotom, umfassend einen Präparathalter und einen damit zusammenwirkenden Messerhalter.

Kryostatmikrotome der eingangs genannten Art sind bereits seit längerem bekannt und werden üblicherweise verwendet, um von Präparaten dünne Scheiben abzuschneiden, die dann unter einem Mikroskop analysiert werden sollen. Dazu weisen die Kryostatmikrotome eine gekühlte Kryostatkammer auf, in der sich ein Präparathalter zur Aufnahme eines zu schneidenden Präparates befindet sowie ein gegen den Präparathalter beweglicher Messerhalter mit einem daran aufgenommenen Messer, das von den Präparaten die besagten Scheiben abschneidet. Die Kühlung ist dabei erforderlich, um durch Gefrieren präparierte Präparate zu schneiden. Die optimale Temperatur des zu schneidenden Präparates wird hierbei üblicherweise empirisch ermittelt und ist je nach Präparatkonsistenz für unterschiedliche Präparate unterschiedlich. Die Kühlung herkömmlicher Kryostatmikrotome mit Kryostatkammer erfolgte dabei auf unterschiedliche Art und Weise.

Bei einem in der US 4,548,051 gezeigten Kryostatmikrotom, das wie eben beschrieben aufgebaut ist, wird die Kühlung durch eine zentrale Kühleinrichtung bewerkstelligt, die die Luft in der Kryostatkammer soweit abkühlt, bis das zu schneidende Präparat die geeignete Temperatur angenommen hat.

Die WO 87/02130 zeigt ebenfalls ein oben beschriebenes Kryostatmikrotom. Die Kühlung erfolgt hierbei über eine zentrale Kühleinrichtung in der die Lufttemperatur der Kryostatkammer abgekühlt wird, sowie eine zusätzliche Kühlung am Präparathalter in Form eines Peltierelements, über die eine Feinregelung der Temperatur des zu schneidenden Präparates vorgenommen werden kann.

Es sind ferner aus dem Stand der Technik Mikrotome bekannt, die in Umgebungsluft arbeiten und sich nicht in einer Kryostatkammer befinden. Da hierbei das Messer und das Präparat nicht wie in einer geschlossenen Kryostatkammer durch eine zentrale Kühlung abgekühlt werden können, befindet sich hierbei im Präparathalter wie auch im Messerhalter jeweils eine Kühleinrichtung, über die der Präparathalter und der Messerhalter abgekühlt werden können. Bei derartigen Mikrotomen wird der Messerhalter und damit das Messer auf eine fest vorgegebene Temperatur abgekühlt, während die Temperatur des Präparates im Präparathalter einstellbar ist. Derartige Kryostatmikrotome erreichen üblicherweise nicht besonders tiefe Temperaturen, da die warme Umgebungsluft das Mikrotom zu stark erwärmt.

Aus der US 3495490 A und der WO 88/02851 sind Mikrotome mit Gefrierkammern und offenen Kühlsystemen bekannt, bei denen ein flüssiges Kühlmittel in offenen Behältern verdampft. Dabei sind separate Verdampfungsbehälter auch am Präparathalter und am Messerhalter vorgesehen. Mit Hilfe zusätzlicher elektrischer Heizungen am Messerhalter und am Präparathalter sind die Temperaturen des Messerhalters und des Präparathalters unabhängig voneinander einstellbar. Nachteilig ist bei diesen bekannten Systemen jedoch der Verbrauch an Kühlmittel mit den dafür verbundenen Betriebskosten.

Aufgabe der vorliegenden Erfindung ist es, ein eingangs bezeichnetes Kryostatmikrotom mit Kryostatkammer mit verbesserten Eigenschaften vorzuschlagen.

Die Aufgabe wird gemäß den Merkmalen des Anspruches 1 gelöst.

Der Grundgedanke der Erfindung ist darin zu sehen, daß sowohl die Temperatur des Präparathalters, wie auch die Temperatur des Messerhalters unabhängig von einander einstellbar sind. Unter dem Begriff einstellbar soll hierbei verstanden werden, daß die Temperatur in einem Temperaturbereich vom Benutzer wählbar ist, und die Temperatur dann gemäß der gewählten Temperatur durch einen Regelmechanismus eingeregelt wird.

Hieraus ergeben sich eine Reihe von besonderen Vorteilen. Es hat sich nämlich gezeigt, daß die Güte eines Schnittes neben der Temperatur des Präparates auch ganz erheblich von der Temperatur des Messers abhängt. Durch die gesonderte Einstellbarkeit der Temperatur des Messerhalters und damit des daran befestigten Messers können deshalb die Schnitte des Präparates erheblich verbessert werden, indem für den Präparathalter und den Messerhalter die jeweils optimale Temperatur eingestellt wird, die für Messer und Präparat verschieden sein kann. Da sich außerdem, wie bei Kryostatmikrotomen mit Kryostatkammer bisher noch nicht bekannt, eine Kühlung unmittelbar auf dem Messerhalter befindet, muß die Raumtemperatur in der Kryostatkammer bei weitem nicht mehr so niedrig gehalten werden, wie dies bei herkömmlichen Kryostatmikrotomen mit Kryostatkammer erforderlich war. Hierdurch ergibt sich insbesondere der Vorteil, daß neben einem verminderten Energieverbrauch zur Kühlung der Kammer auch die Dimensionierung der Kühleinrichtung stark vermindert werden kann, was einer verminderten Größe des gesamten Mikrotom-Kryostaten zugutekommt. Außerdem kann der Mikrotom-Kryostat erheblich schneller als bisherige Mikrotom-Kryostate mit Kryostatkammer in Betrieb genommen werden, da das Messer und das Präparat nicht erst über die Raumtemperatur abgekühlt werden müssen, sondern beide unmittelbar gekühlt sind.

Zur Temperatur-Regelung des Präparathalters und des Messerhalters kommen hierbei unterschiedliche Möglichkeiten in Betracht. Die Kühlungsregelung kann beispielsweise in Form eines hinlänglich bekannten Zweipunktreglers erfolgen, bei dem die Kühlung nach Unterschreiten der eingestellten Temperatur ausgeschaltet wird und nach Überschreiten der eingestellten Temperatur wieder zugeschaltet wird. Die Einstellung der Temperatur kann jedoch auch erfolgen, indem der Messerhalter und der Präparathalter unabhängig voneinander kühl- und heizbar sind.

Eine Möglichkeit dazu besteht beispielsweise darin, daß als Kühlung und Heizung im Präparathalter bzw. im Messerhalter ein Peltierelement vorgesehen ist, wobei Peltierelemente in Abhängigkeit von der technischen Stromrichtung einer an das Peltierelement angelegten Spannung entweder heizen oder kühlen. Zur Kühlung des Peltierelementes sollten zusätzlich im Messerhalter und im Präparathalter kleine, an eine Kühleinrichtung angeschlossene Verdampfer vorgesehen sein.

Da die Temperatur des Messers üblicherweise nicht so tief bemessen sein muß, wie die Temperatur des zu schneidenden Präparates kann im Messerhalter anstelle des Peltierelementes auch ein im Gegensatz hierzu kostengünstigeres, elektrisches Heizelement eingebaut werden, das zum Einstellen und/oder Regeln der Temperatur des Messerhalters gegen die Temperatur des Verdampfers definiert gegenheizt.

Obwohl die Kühlung des Präparathalters und des Messerhalters hauptsächlich durch die hieran angebrachten Verdampfer erfolgt, ist es dennoch vorteilhaft, in der Kryostatkammer einen zusätzlichen Verdampfer vorzusehen, der die Lufttemperatur in der Kryostatkammer absenkt. Die hierbei vorzusehende Lufttemperatur in der Kryostatkammer kann jedoch im Gegensatz zu herkömmlichen Kryostaten mit Kryostatkammer weit oberhalb der Temperatur des zu schneidenden Präparates bzw. des Messers liegen.

Um den Energiebedarf zum Abkühlen des Mikrotoms möglichst gering zu halten und damit auch die Dimensionierung der Kühleinrichtung so gering wie möglich zu machen, sollten möglichst wenig Teile des Mikrotoms in der Kryostatkammer vorgesehen sein, damit wenige Teile abzukühlen sind und außerdem die Kryostatkammer klein gehalten werden kann. Darüberhinaus sollten auch elektronische Komponenten, die zu einer Erwärmung der Kryostatkammer beitragen könnten, wie beispielsweise elektrische Motore etc. außerhalb der Kryostatkammer angeordnet werden. Damit ist das Mikrotom dann teilweise innerhalb und teilweise außerhalb der Kryostatkammer angeordnet. Um zu gewährleisten, daß zwischen den innerhalb der Kryostatkammer liegenden Teilen und den außerhalb der Kryostatkammer liegenden Teilen möglichst wenig Kälte abfließen kann und um gleichzeitig eine möglichst hohe Stabilität des Mikrotoms zu gewährleisten, sollte im Übergangsbereich zwischen den innerhalb der Kryostatkammer liegenden Teilen des Mikrotoms und den außerhalb der Kryostatkammer liegenden Teilen des Mikrotoms ausschließlich Komponenten aus VA-Stahl eingesetzt werden.

Besonders vorteilhaft kann das Kryostatmikrotom eingesetzt werden, wenn der Präparathalter und der Messerhalter in sehr kurzer Zeit auf die eingestellte Arbeitstemperatur abgekühlt werden. Dies ist dann besonders gut möglich, wenn in der Kühleinrichtung zwei Kühlkreisläufe vorgesehen werden, wobei der zweite Kühlkreislauf an den die Verdampfer im Präparathalter und im Messerhalter angeschlossen sind, über einen Koaxial-Wärmetauscher bereits durch einen ersten Kühlkreislauf vorgekühlt wird.

Weitere Vorteile und Weiterbildungen der Erfindung ergeben sich aus den Zeichnungen.

Hierin zeigen:
- Figur 1: eine rein schematische Seitenansicht des Kryostatmikrotoms;
- Figur 2: einen Teilschnitt durch das Kryostatmikrotom gemäß Figur 1;
- Figur 3: ein Blockschaltbild der Kühleinrichtung von Mikrotomen gemäß Figur 1.

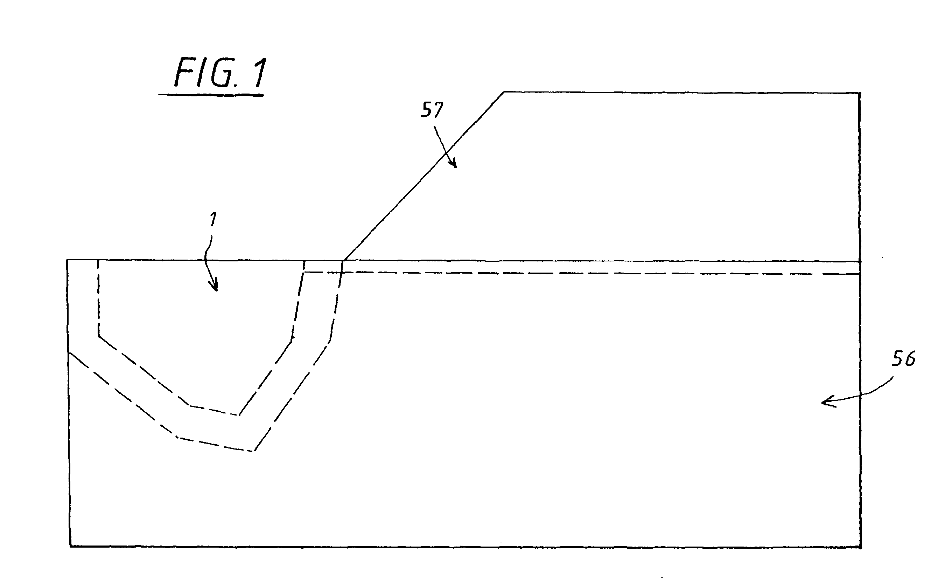

Figur 1 zeigt eine rein schematische Seitenansicht des erfindungsgemäßen Kryostatmikrotoms, aus dem neben dem Umriß des Kryostatmikrotoms lediglich die Aufteilung des Kryostatmikrotoms hervorgeht. Mit Bezugsziffer (1) wird hierbei die Kryostatkammer bezeichnet, mit (57) die Kammer zur Aufnahme der elektronischen Steuer- und Regelkomponenten und mit (56) die Kammer zur Aufnahme wichtiger Komponenten der Kühleinrichtung.

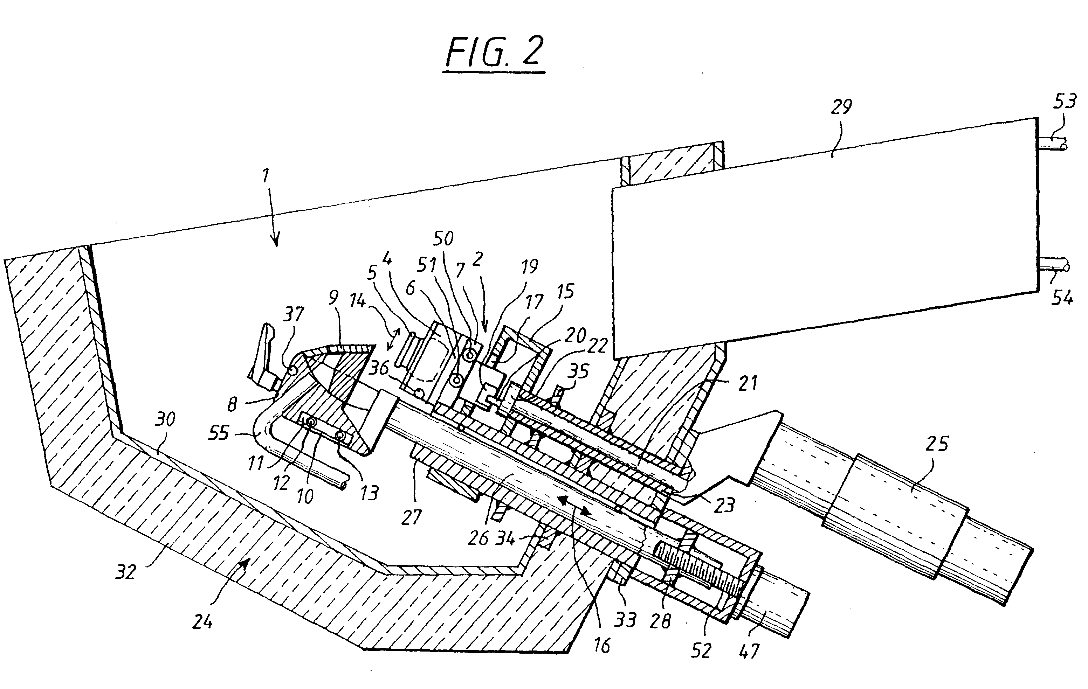

Figur 2 zeigt ein nicht maßstäblich gezeichneten Teilschnitt einer Kryostatkammer (1) mit einem hierin angeordneten Mikrotom (2) eines erfindungsgemäßen Kryostatmikrotoms gemäß Figur 1, wobei die Darstellung sich im wesentlichen auf die rein mechanischen Komponenten des Mikrotoms (2) beschränkt und Details wie beispielsweise elektrische Leitungen, Verbindungen der Kühleinrichtung etc. weitestgehend bei Seite gelassen wurden. Das Mikrotom (2) umfaßt hierbei einen kühlbaren Präparathalter (4), an dem das zu schneidende Präparat (5) befestigt ist. Zur Kühlung des Präparathalters (4) ist im Präparathalter (4) ein kleiner Verdampfer (7) vorgesehen, der über Anschlüsse (50,51) an einer weiter unten beschriebenen Kühleinrichtung angeschlossen ist. Der kleine Verdampfer (7) liefert hierbei eine nicht weiter regelbare Temperatur, so daß zusätzlich auf dem Verdampfer (7) ein Peltierelement (6) aufgebracht ist, mit dem in Abhängigkeit von der Stromrichtung eines hieran angelegten Stromes zusätzlich gekühlt oder geheizt werden kann. Hierdurch läßt sich die Temperatur des Präparathalters sehr fein entsprechend den Erfordernissen des zu schneidenden Präparates (5) einstellen.

Zusätzlich weist das Mikrotom (2) auch einen kühlbaren Messerhalter (8) auf. Der Messerhalter (8) dient hierbei der Aufnahme eines Messers (9) oder einer Einwegklinge, wobei der Präparathalter (4) mit dem daran befestigten Präparat (5) an der Schneidkante des Messers (9) bzw. der Einwegklinge vorbeigeführt wird um hierdurch dünne Scheiben vom Präparat (5) abzuschneiden. Die genaue Mechanik zur Durchführung des besagten Schneidvorganges wird weiter unten noch genau erläutert werden.

Zur Kühlung des Messerhalters (8) ist im unteren Bereich des Messerhalters (8) ebenfalls ein über Anschlüsse (12,13) an eine Kühleinrichtung angeschlossener Verdampfer (10) vorgesehen, der ebenfalls den Messerhalter (8) und damit das Messer (9) nach einer hinreichend langen Zeit auf einen weitestgehend konstanten Temperaturwert abkühlt. Da die hierdurch erzielbare Temperatur für sämtliche wählbaren Temperaturen des Messers (9) bzw. der Klinge ausreicht, ist zur Einstellung der Temperatur lediglich unterhalb des Verdampfers im Messerhalter (8) ein elektrisches Heizelement (11) vorgesehen. Zur Einstellung der Temperatur des Messerhalters (8) wird einfach die Heizleistung des Heizelementes (11) solange erhöht, bis der Messerhalter (8) die gewünschte Temperatur aufweist.

Somit sind sowohl die Temperatur des Präparathalters (4) wie auch die Temperatur des Messerhalters (8) unabhängig von einander einstellbar. Zur Einstellung der Temperatur sind der Messerhalter (8) und der Präparathalter (4) dazu unabhängig von einander über die Verdampfer (7, 10) bzw. das Peltierelement (6) kühlbar, sowie auch über das Peltierelement (6) und die Heizelement (11) heizbar. Sowohl im Messerhalter (8) als auch im Präparathalter (4) ist jeweils ein Temperaturfühler (36, 37) vorgesehen, durch die die aktuelle Temperatur des Präparathalters (4) im Bereich des Präparates und die des Messerhalters (8) im Bereich des Messers separat gemessen wird. Mittels einer nicht dargestellten Regeleinrichtung werden die Temperaturen von Präparathalter (4) und Messerhalter (8) auf die jeweils voreingestellten, für Präparathalter (4) und Messerhalter (8) im allgemeinen verschiedenen Solltemperaturen eingeregelt, derart daß die durch die Temperaturfühler (36, 37) aufgenommenen Temperaturmeßwerte der jeweiligen Solltemperatur entsprechen. Die Temperatur in der Kryostatkammer selbst wird dagegen nicht separat geregelt.

Im folgenden soll nun anhand von Figur 2 die genaue Mechanik des Mikrotoms erläutert werden, über die der Präparathalter (4) und damit das hieran angeordnete Präparat (5) am Messer (9) des Messerhalters (8) vorbei bewegt wird. Zum Schneiden des Präparates (5) wird hierbei der Präparathalter (4) entsprechend dem Doppelpfeil (14) auf- und abbewegt. Dazu ist der Präparathalter (4) zwischen zwei Seitenteilen (15), von denen hier nur eins gezeigt ist und die ein Chassis bilden, in Richtung des Pfeils (14) beweglich geführt. Die Seitenteile (15) weisen dazu an ihrer Innenwand jeweils eine V-förmige Nut (17) auf, in der hier nicht näher gezeigte am Präparathalter (4) befestigte Rollen laufen. Die Rollen sind hierbei am Präparathalter (4) derart angeordnet, daß hierbei abwechselnd jeweils eine Rolle auf einem Schenkel der V-Nut sowie eine darunterliegende Rolle auf dem anderen Schenkel der V-Nut läuft usw.. Derartige Führungen sind dem Fachmann unter dem Begriff Kreuzrollenführung bekannt und sollen hier nicht näher erläutert werden. Auf der Rückseite des Präparathalters (4) befindet sich eine waagerechte Nut (19), die der Auf- und Abbewegung des Präparathalters (4) dient. In der Nut (19) ist ein Nutstein horizontal verschiebbar geführt. Ein Vorsprung (20) eines Hebels (22) an einer drehbaren Welle (21) greift in ein Loch durch den Nutstein ein. Bei Drehung der Welle (21) resultiert aus der horizontalen Bewegungskomponente des Hebels (22) eine horizontale Bewegung des Nutsteins in der Nut (19) und aus der vertikalen Bewegungskomponente des Hebels die vertikale Bewegung des Präparathalters (4).

Wie aus Figur 2 ersichtlich, wird die Welle (21) über einen außerhalb der Kryostatkammer (1) befindlichen Antrieb (25) in Rotation versetzt. Dazu ist die Welle (21) drehbar in einer Hülse (23) geführt, die die Isolierwand (24) der Kryostatkammer (1) durchbricht. Der besagte Antrieb (25) kann hierbei, wie dies in der Figur 1 gezeigt ist, in Form eines Elektromotors ausgebildet sein oder aber auch in Form eines Handradgetriebes, das durch ein seitlich am Kryostatmikrotom angebrachtes Handrad angetrieben wird.

Die Zustellung des Messers (9) in Richtung dem Pfeil (16) erfolgt hierbei wie folgt. So ist der Messerhalter (8) an zwei hintereinander liegenden Rohren (26), von denen hier nur das hintere gezeigt ist, über entsprechende Führungen in den Hülsen (27) in Richtung des Pfeils (16) beweglich geführt. Wie auch hier ersichtlich, befindet sich der Messerhalter in der Kryostatkammer (1), während sich das andere Ende der Rohre (26) außerhalb der Kryostatkammer (1) befindet. Zur Bewegung des Messerhalters (8) in Richtung des Pfeils (16) verbindet hierbei eine Brücke (28) die Rohre (26), wobei in der Mitte der Brücke eine hier nicht näher bezeigte Mutter vorgesehen ist. Die Mutter steht in Verbindung mit einer Gewindespindel (52), die ihrerseits von einem Schrittmotor (47) angetrieben wird. Zur Verschiebung des Messerhalters (8) in Richtung des Pfeils (16) wird hierbei einfach vom Schrittmotor (47) die besagte Gewindespindel(52) gedreht, so daß dann die auf die Gewindespindel aufgeschraubte Mutter der Brücke (28) entlang des Pfeils (16) vor- und zurückbewegt wird. Natürlich kann die Position des Schrittmotors (47) und der Mutter auch vertauscht werden, sodaß sich der Schrittmotor (47) dann an der Brücke (28) befindet und die Mutter dann dort sitzt wo der Schrittmotor (47) in Figur 2 angeordnet ist.

Das Mikrotom selbst ist an der schräg geneigten Rückwand der Kryostatkammer so angeordnet, daß die Bewegungsrichtung für die Zustellbewegung des Messerträgers schräg aufwärts bzw. abwärts erfolgt. Gleichzeitig ist die Einbauhöhe derart gewählt, daß zwischen den untersten Mikrotomkomponenten und dem Boden der Kryostatkammer ein freier Raum von 5 bis 10 cm verbleibt, wodurch die Kryostatkammer leicht von Schnittabfällen gereinigt werden kann.

Zusätzlich sei noch auf einen Lamellenverdampfer (29) in der Kryostatkammer (1) hingewiesen, der zusätzlich zu den im Messerhalter (8) und in dem Präparathalter (4) angeordneten Verdampfern zusätzlich die Lufttemperatur der Kryostatkammer (1) abkühlt. Da der Messerhalter (8) und der Präparathalter (4) separat gekühlt werden, kann der Lamellenverdampfer (29) jedoch relativ gering dimensioniert werden, da die Lufttemperatur in der Kryostatkammer (1) nicht mehr der Temperatur des Präparathalters (4) bzw. des Messerhalters (8) entsprechen muß. Während bei herkömmlichen Kryostatmikrotomen die Lufttemperatur der Kryostatkammer bis zu -55° oder gar -60° abgekühlt werden mußte, reicht es bei dem erfindungsgemäßen Kryostatmikrotom die Lufttemperatur auf -20° abzukühlen. Der Messerhalter kann dann bei einer Lufttemperatur von -20° eine Temperatur von -35° annehmen und der Präparathalter (4) kann sogar durch das Peltierelement (6) bis auf -55° abgekühlt werden. Wie bereits oben ausgeführt, ergibt sich hierdurch eine Energieeinsparung, die sich in einer wesentlich geringer dimensionierten Kühleinrichtung und damit natürlich einem wesentlich geringer dimensionierten Kryostatmikrotom niederschlägt. Als weiterer Vorteil der direkten Kühlung des Präparathalters (4) und des Messerhalters (8) ergibt sich, daß höhere Lufttemperaturen in der Kryostatkammer (1) sich weniger nachteilig auf die Schnittqualität auswirken; deshalb kann auch der Abstand des Mikrotoms zur Oberkante der Kryostatkammer außerordentlich gering ausgelegt werden, was wiederum der Ergonomie zugute kommt.

Um die notwendige Kühlleistung weiter zu verringern, ist die Kryostatkammer (1) über eine Kryostatwand (24) gut wärmeisoliert. Die Kryostatwand (24) besteht dabei aus einer VA-Stahlblechwanne (30), die von einer gut wärmeisolierenden Schaumstoffschicht (32) umgeben ist. Zusätzlich ist die Kryostatkammer (1) durch eine hier nicht näher gezeigte Kunststoff- oder Glasscheibe abgedeckt. Darüberhinaus wurden große Teile des Mikrotoms (2) außerhalb der Kryostatkammer (1) angeordnet, damit einerseits die Kryostatkammer (1) möglichst klein wird und andererseits möglichst wenig Teile des Mikrotoms mitzukühlen sind. Darüberhinaus wurden insbesondere elektronische Bauteile, wie beispielsweise der Schrittmotor (47) oder der Antrieb (25) außerhalb der Kryostatkammer (1) angeordnet, um ein Aufheizen durch die von diesen Komponenten abgestrahlte Abwärme zu vermeiden. Da das Mikrotom (2) teilweise innerhalb und teilweise außerhalb der Kryostatkammer (1) angeordnet ist, sind ferner im Übergangsbereich zwischen den innerhalb der Kryostatkammer (1) angeordneten Komponenten und den außerhalb der Kryostatkammer (1) angeordneten Komponenten des Mikrotoms (2) ausschließlich VA-Stahl eingesetzt. Die Stangen (26), die Hülsen (27), die Welle (21) und die Hülse (23) sind somit aus VA-Stahl gefertigt. Die Wahl dieses Materials hat den besonderen Vorteil, daß einerseits ein Material mit einer sehr geringen Wärmeleitfähigkeit verwendet wird, das andererseits aber eine sehr hohe Steifigkeit aufweist.

Um die Steifigkeit des gesamten Mikrotoms (2) noch weiter zu erhöhen, sind die Hülsen (27) und die Hülse (23) über Brücken (33, 34, 35) weiterhin versteift.

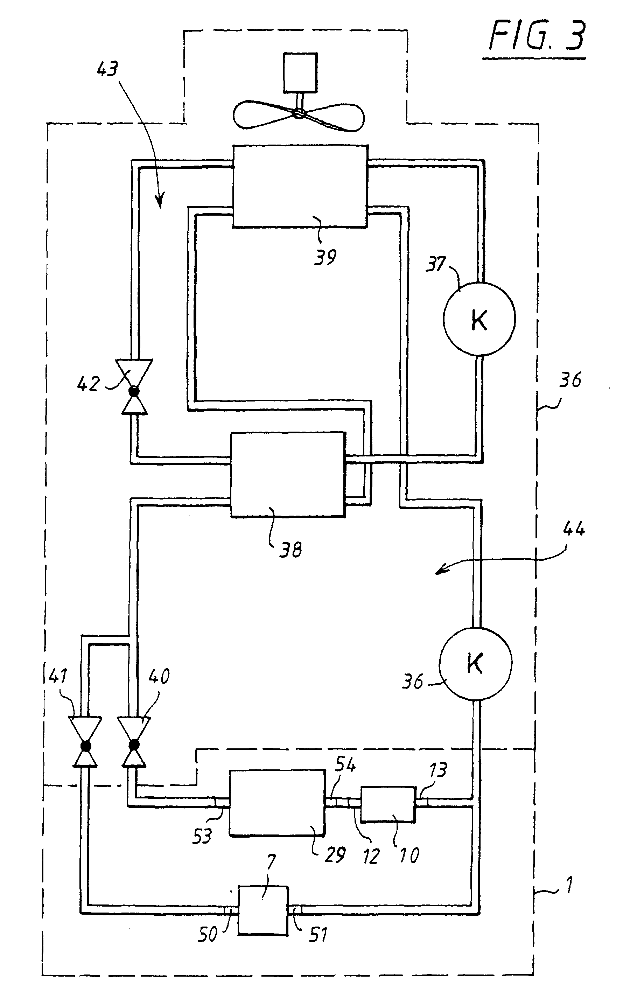

Anhand von Figur 3 soll nun die Kühleinrichtung des Kryostatmikrotoms erläutert werden, wobei sich Teile hiervon in der Kryostatkammer (1) befinden sowie andere Teile in der Kammer (56) des Kryostatmikrotoms (vgl. Figur 1). Genau genommen handelt es sich bei der gezeigten Kühleinrichtung um zwei seriell hintereinander geschaltete Kühlkreisläufe (43, 44), bei denen ein erster Kühlkreislauf (43) zur Vorkühlung dient und ein zweiter Kühlkreislauf (44) dann über die Verdampfer (7, 10) im Präparathalter (4) und im Messerhalter (8) sowie über den Lamellenverdampfer (29) läuft. Der erste Kühlkreislauf (43) weist einen Verflüssiger (39) auf, der über eine Drossel (42) bzw. eine Kapillare in einem Koaxial-Wärmetauscher (38) läuft und über einen Kompressor (37) wieder in den Verflüssiger (39) zurückläuft. Im Koaxial-Wärmetauscher (38) wird hierbei durch den ersten Kühlkreislauf (43) das Kühlmittel für den zweiten noch zu beschreibenden Kühlkreislauf (44) vorgekühlt. Der Koaxial-Wärmetauscher (38) wirkt dabei für den ersten Kühlkreislauf wie ein Verdampfer, der durch das verdampfende Kühlmittel den zweiten Kühlkreislauf (44) kühlt. Der zweite Kühlkreislauf (44) ist ähnlich aufgebaut, wie der erste. Auch hierbei sind wie bei Kältemaschinen üblich, Drosseln (40, 41) bzw. Kapillaren vorgesehen, deren Ausgang dann mit dem Lamellenverdampfer (29) und dem Verdampfer (10) im Messerträger (8) verbunden ist bzw. mit dem Verdampfer (7) im Präparathalter (4). Die Ausgänge der Verdampfer (7, 10) sind gleichfalls mit einem Kompressor (36) verbunden, der das komprimierte, dampfförmige Kühlmittel dann wieder in den Verflüssiger (39) pumpt. Der eben beschriebene zweigeteilte Kühlkreislauf weist den besonderen Vorteil auf, daß der zweite Kühlkreislauf (44) bereits vorgekühlt wird. Hierdurch kann die Kryostatkammer (1) bzw. das Kryostatmikrotom (2) innerhalb relativ kurzer Zeit auf die Arbeitstemperatur gekühlt werden. Außerdem läßt sich das Kryostatmikrotom (2) hierdurch relativ einfach in einen Stand-By-Modus umschalten, in dem nur noch der Kühlkreislauf (43) zum Vorkühlen des Koaxial-Wärmetauschers (38) läuft. Der Kühlkreislauf (44) kann im Stand-By-Modus ausgeschaltet werden.

Die Verdampfer (7, 10, 29) sind damit also Bestandteil eines Kühlkreislaufes, der einen Koaxial-Wärmetauscher (38) aufweist.

Außerdem ist der Kühlkreislauf hiermit so ausgestaltet, daß sich der Verflüssiger (39) und wenigstens einer der Kompressoren (36, 37) auf der Höhe der Kryostatkammer (1) hinter Kryostatkammer (1) befindet. Dies hat den besonderen Vorteil, daß ein relativ kompaktes Kryostatmikrotom geschaffen werden kann, das leicht transportabel ist und unproblematisch auf einem Tisch angeordnet werden kann.

Hinzuweisen sei noch, daß die Verdampfer (7) im Präparathalter einerseits und der Verdampfer (10) im Messerhalter sowie der Lamellenverdampfer (29) andererseits in zwei parallelgeschalteten Teilkreisläufen des zweiten Kühlkreislaufes (44) angeordnet sind, die jeweils eine eigene Drossel (40, 41) aufweisen. Dadurch treten gegenüber einkreisigen Kühlkreisläufen, bei denen sämtliche Verdampfer seriell geschaltet sind, geringere Druckprobleme auf. Außerdem ergibt sich durch den separaten Teilkreislauf für den Verdampfer (7) im Präparathalter eine niedrigere Tiefsttemperatur. Da die Temperatur des Messers und der Kryostatkammer in der Regel höher als die Präparattemperatur sein kann, sind die zugehörigen Verdampfer (10, 29) seriell geschaltet. Unter Inkaufnahme eines etwas größeren Aufwandes können jedoch auch die Teilkreisläufe für alle drei Verdampfer getrennt sein und jeweils eine eigene Drossel aufweisen.

Vorteilhafterweise kann das Kryostatmikrotom auch Anschlüsse aufweisen, mit denen dieses an externe Zusatzgeräte angekoppelt werden kann. So weist beispielsweise der Messerhalter eine hier nur teilweise gezeigte Absaugeinrichtung (55) auf, über die Schnittabfälle die beim Schneiden des zu schneidenden Präparates (5) anfallen abgesaugt werden. Zur Nutzung dieser Einrichtung kann beispielsweise auf der Unterseite des Kryostatmikrotoms ein mit der Absaugeinrichtung (55) verbundener, hier nicht näher gezeigter Anschluß vorgesehen sein, an den ein einen Unterdruck erzeugendes Geräte angeschlossen wird, durch dessen Unterdruck die Schnittabfälle über die Absaugeinrichtung (55) am Messerhalter (8) absaugt werden. Es ist gleichfalls auch denkbar, daß auf der Unterseite des Kryostatmikrotoms ein Anschluß für eine Desinfektionsvorrichtung vorgesehen ist, über die die Kryostatkammer des Kryostatmikrotoms desinfiziert wird.

Abschließend sei nun zu erwähnen, daß die Erfindung keinesfalls auf das hier gezeigte Ausführungsbeispiel beschränkt ist. Vielmehr sollen auch alle abgewandelten Ausführungsformen miterfaßt sein, beispielsweise kann der Kühlkreislauf auch als ein einzelner Kühlkreislauf angeordnet sein, so daß dann die Drossel (42) der Koaxial-Wärmetauscher (38) und der Kompressor (37) weggelassen werden können. Gleichfalls kann auch beispielsweise die Mechanik des Mikrotoms (2) vollkommen anders ausgeführt sein, um die Schneidbewegung durchzuführen.

## Patentansprüche

1. Kryostatmikrotom mit einer Kryostatkammer (1), einem in der Kryostatkammer (1) angeordneten Mikrotom (2) umfassend einen kühlbaren Präparathalter (4) und einen kühlbaren Messerhalter (8), wobei sowohl die Temperatur des Präparathalters (4) wie auch die Temperatur des Messerhalters (8) unabhängig voneinander einstellbar sind, wobei der Messerhalter (8) und der Präparathalter (4) kleine Verdampfer (7, 10) aufweisen, **dadurch gekennzeichnet daß** die Verdampfer (7, 10) jeweils einen Einlaß (12, 50) für ein flüssiges Kühlmittel und einen Auslaß (13, 51) aufweisen und daß die Auslässe (13, 51) an einen Kompressor (36) angeschlossenen sind, der gasförmiges Kühlmittel zu einem Verflüssiger (39) pumpt.

2. Kryostatmikrotom nach Anspruch 1, wobei der Messerhalter (8) und der Präparathalter (4) zur Einstellung der Temperatur unabhängig voneinander kühl- und heizbar sind.

3. Kryostatmikrotom nach Anspruch 2, wobei im Messerhalter ein Heizelement (11) vorgesehen ist.

4. Kryostatmikrotom nach Anspruch 3, wobei zusätzlich in der Kryostatkammer ein Verdampfer (29) vorgesehen ist.

5. Kryostatmikrotom nach Anspruch 1, wobei das Mikrotom (2) teilweise innerhalb und teilweise außerhalb der Kryostatkammer (1) angeordnet ist, wobei im Übergangsbereich zwischen den innerhalb der Kryostatkammer und den außerhalb der Kryostatkammer angeordneten Komponenten des Mikrotoms ausschließlich VA-Stahl eingesetzt ist.

6. Kryostatmikrotom nach Ansprüchen 1-5, wobei die Verdampfer (7, 10, 29) Bestandteil eines Kühlkreislaufes (43, 44) sind, der einen Koaxial-Wärmetauscher (38) aufweist.

7. Kryostatmikrotom nach einem der Ansprüche 1- 6, wobei der Verdampfer (7) des Präparathalters (4) und der Verdampfer (10) des Messerhalters (8) in getrennten Teil-Kühlkreisläufen angeordnet sind, die jeweils eine eigene Drossel (40, 41) aufweisen.

## Claims

1. Cryostat microtome, having a cryostat chamber (1), a microtome (2) which is arranged in the cryostat chamber (1) and comprises a coolable specimen holder (4) and a coolable blade holder (8), it being possible to set both the temperature of the specimen holder (4) and the temperature of the blade holder (8) independently of one another, the blade holder (8) and the specimen holder (4) having small evaporators (7, 10), **characterized in that** the evaporators (7, 10) each have an inlet (12, 50) for a liquid coolant and an outlet (13, 51), and **in that** the outlets (13, 51) are connected to a compressor (36) which pumps gaseous coolant to a liquefier (39).

2. Cryostat microtome according to Claim 1, in which the blade holder (8) and the specimen holder (4) can be cooled and heated independently of one another in order to set the temperature.

3. Cryostat microtome according to Claim 2, in which a heater element (11) is provided in the blade holder.

4. Cryostat microtome according to Claim 3, in which an evaporator (29) is additionally provided in the cryostat chamber.

5. Cryostat microtome according to Claim 1, in which the microtome (2) is arranged partially inside and partially outside the cryostat chamber (1), exclusively VA steel being used in the transition region between those components of the microtome which are arranged inside the cryostat chamber and those components of the microtome which are arranged outside the cryostat chamber.

6. Cryostat microtome according to Claims 1-5, in which the evaporators (7, 10, 29) are part of a cooling circuit (43, 44) which has a coaxial heat exchanger (38).

7. Cryostat microtome according to one of Claims 1-6, in which the evaporator (7) of the specimen holder (4) and the evaporator (10) of the blade holder (8) are arranged in separate partial cooling circuits, which each have a dedicated throttle (40, 41).

## Revendications

1. Cryostat-microtome comprenant une enceinte de cryostat (1), un microtome (2) disposé dans l'enceinte de cryostat (1), comprenant un support de préparation (4) pouvant être refroidi et un support de mesure (8) pouvant être refroidi, la température du support de préparation (4) ainsi que la température du support de mesure (8) pouvant être ajustées indépendamment l'une de l'autre, le support de mesure (8) et le support de préparation (4) présentant des petits évaporateurs (7, 10), **caractérisé en ce que** les évaporateurs (7, 10) présentent chacun une entrée (12, 50) pour un réfrigérant liquide et une sortie (13, 51) et **en ce que** les sorties (13, 51) sont raccordées à un compresseur (36) qui pompe le réfrigérant gazeux vers un condenseur (39).

2. Cryostat-microtome selon la revendication 1, dans lequel le support de mesure (8) et le support de préparation (4) peuvent être refroidis et chauffés indépendamment l'un de l'autre pour l'ajustement de la température.

3. Cryostat-microtome selon la revendication 2, dans lequel un élément chauffant (11) est prévu dans le support de mesure.

4. Cryostat-microtome selon la revendication 3, dans lequel un évaporateur (29) est en outre prévu dans l'enceinte de cryostat.

5. Cryostat-microtome selon la revendication 1, dans lequel le microtome (2) est disposé partiellement à l'intérieur et partiellement à l'extérieur de l'enceinte de cryostat (1), de l'acier VA étant exclusivement utilisé dans la zone de transition entre les composants du microtome disposés à l'intérieur de l'enceinte de cryostat et les composants disposés à l'extérieur de l'enceinte de cryostat.

6. Cryostat-microtome selon les revendications 1 à 5, dans lequel les évaporateurs (7, 10, 29) sont des constituants d'un circuit de refroidissement (43, 44) qui présente un échangeur de chaleur coaxial (38).

7. Cryostat-microtome selon l'une quelconque des revendications 1 à 6, dans lequel l'évaporateur (7) du support de préparation (4) et l'évaporateur (10) du support de mesure (8) sont disposés dans des circuits de refroidissement partiels séparés qui présentent chacun un étranglement propre (40, 41).
